# EUROPÄISCHE PATENTSCHRIFT

(11) **EP 1 498 299 B1**
(45) Veröffentlichungstag und Bekanntmachung des Hinweises auf die Patenterteilung: **15.11.2006**
(21) Anmeldenummer: 04015564.0
(22) Anmeldetag: 02.07.2004
(51) Int. Cl.: B60N 2/07, B60N 2/427

(54) **Sitzschienenpaar für einen Fahrzeugsitz**
Seat slide for a vehicle seat.
Paire de glissière pour siège de véhicule.

(30) Priorität: 15.07.2003 DE 10331894
(43) Veröffentlichungstag der Anmeldung: 19.01.2005
(73) Patentinhaber: KEIPER GmbH & Co. KG, 67657 Kaiserslautern (DE)
(72) Erfinder: Roth, Stefan, 67659 Kaiserlautern (DE); Dill, Thomas, 67655 Kaiserslautern (DE); Braun, Dieter, 67697 Otterberg (DE); Mühlberger, Joachim, 67271 Obersülzen (DE); Teufel, Ingo, 67806 Rockenhausen (DE)
(74) Vertreter: Patentanwälte Hosenthien-Held und Dr. Held

(56) Entgegenhaltungen:
- EP-A- 0 709 249
- EP-A- 1 188 603
- DE-A- 3 910 313
- DE-A- 19 756 252
- DE-A- 19 926 843
- US-A- 3 669 397
- US-A- 4 787 667

## Beschreibung

Die Erfindung betrifft ein Sitzschienenpaar für einen Fahrzeugsitz, insbesondere für einen Kraftfahrzeugsitz, mit den Merkmalen des Oberbegriffs des Anspruches 1.

Bei einem aus der DE 39 10 313 A1 bekannten Sitzschienenpaar dieser Art, welches auf der Fahrzeugsitzseite mit einem Gurtschloss angeordnet ist, ist am hinteren Ende (oder einem anderen kritischen Bereich) eine Verstärkung, insbesondere für die zweite Sitzschiene, in Form einer zusätzlichen Klammer vorgesehen. Damit wird vermieden, dass im Crashfall oder bei einem Gurtersatzlasttest in der vordersten Position die erste Sitzschiene aufgrund der über die Befestigungsstelle in die erste Sitzschiene eingeleiteten Kräfte - mit ihrem Verkrallungsbereich die zwei - te Sitzschiene abschneidet.

Der Erfindung liegt die Aufgabe zu Grunde, ein Sitzschienenpaar der eingangs genannten Art zu verbessern, insbesondere hinsichtlich Herstellungskosten und Gewicht. Diese Aufgabe wird erfindungsgemäß durch ein Sitzschienenpaar mit den Merkmalen des Anspruches 1 gelöst. Vorteilhafte Ausgestaltungen sind Gegenstand der Unteransprüche.

Erfindungsgemäß ist eine Aussparung vorgesehen, die, genauer gesagt der Materialbereich um sie herum, im Kraftfluss zwischen der Befestigungsstelle und dem Verkrallungsbereich liegt, wodurch die im Crashfall über die Befestigungsstelle eingeleiteten Kräfte eine gezielte plastische Deformation im Bereich der Aussparung vornehmen. Die Deformation senkt die Kraftweiterleitung auf dieser Fahrzeugsitzseite und gestaltet damit die Lastverteilung zwischen den beiden Fahrzeugsitzseiten gleichmäßiger. Dies bewirkt eine Reduktion der auf den Verkrallungsbereich wirkenden Teilkräfte. Gewichts- und kostenerhöhende Verstärkungen der zweiten Sitzschiene sind dann nicht notwendig. Außerdem wird im Crashfall noch etwas Energie dissipiert. Die Aussparung ist eine freie Aussparung, welche im Normalfall zwar auch im Kraftfluß zwischen der Befestigungsstelle und dem Verkrallungsbereich liegt, jedoch ohne sonstige Funktion ist und erst im Crashfall zum Einsatz kommt. Durch eine bevorzugt vorgesehene Einbuchtung am hinteren Rand der ersten Sitzschiene, welche im Normalfall ebenfalls keine Funktion aufweist, wird der Schutz vor einem Einschneiden dieses relativ scharfkantigen und sehr steifen Sitzschienenende in die zweite Sitzschiene verbessert.

In bevorzugter Ausführung ist die Aussparung schlitzförmig ausgebildet, was die Deformation an den Enden den Schlitzes konzentriert, und vorzugsweise gerade und vorzugsweise in Längsrichtung gestreckt, was den Kraftfluß optimiert und die Herstellung einfach hält. Es wird dann eine gezielte Bewegung des Materials vom Bereich der Mitte der Aussparung quer zur Längsrichtung der schlitzförmigen Aussparung erreicht. Die Aussparung ist vorzugsweise im Adapterbereich, also in der Nähe der Befestigungsstelle ausgebildet und vorzugsweise direkt unterhalb derselben angeordnet, was die anderen Bereiche besser abschirmt. Insbesondere bei einem unsymmetrischen Schienenprofil, welches auch unsymmetrisch belastet ist, ist es von Vorteil, wenn die Aussparung quer zur Längsrichtung den Adapterbereich nur teilweise durchdringt, beispielsweise nur in einer Schicht von zwei aneinanderliegenden Schichten ausgebildet ist, welche zusammen den Adapterbereich bilden.

Das erfindungsgemäß ausgebildete Sitzschienenpaar ist für alle Arten von längseinstellbaren Fahrzeugsitzen einsetzbar, um eine verbesserte Lastverteilung zu fördern. Die Wirkung der Aussparung ist aber am größten, wenn das an der Befestigungsstelle angeordnete Strukturteil starr am Adapterbereich angebracht ist.

Im folgenden ist die Erfindung anhand eines in der Zeichnung dargestellten Ausführungsbeispiels näher erläutert. Es zeigen
- Fig. 1: einen Längsschnitt durch das Ausführungsbeispiel entlang der Linie I-I in Fig. 2,
- Fig. 2: einen Querschnitt durch das Ausführungsbeispiel entlang der Linie II-II in Fig. 1, und
- Fig. 3: eine schematische Darstellung eines Fahrzeugsitzes.

Eine erste Sitzschiene 1, die als Oberschiene ausgebildet ist und als Gleitschiene dient, ist in an sich bekannter Weise in einer zweiten Sitzschiene 2, welche als Unterschiene ausgebildet ist und als Führungsschiene dient, in Längsrichtung verschieblich geführt und mit dieser mittels einer nicht näher dargestellten Verriegelungsvorrichtung verriegelbar. Die beiden Sitzschienen 1 und 2 bilden ein Sitzschienenpaar, das auf einer Seite eines Fahrzeugsitzes 5 für ein Kraftfahrzeug angebracht ist und der Längseinstellung des Fahrzeugsitzes 5 dient. Die Positionen, in denen die beiden Sitzschienen 1 und 2 miteinander verriegelbar sind, definieren die möglichen Sitzlängspositionen. Die Anordnung der Sitzschienen 1 und 2 definiert die verwendeten Richtungsangaben. Die zweite Sitzschiene 2 ist für eine fahrzeugstrukturfeste Anbringung ausgelegt, während die erste Sitzschiene 1 sitzteilfest mit den anderen Sitzstrukturteilen des Fahrzeugsitzes 5 verbunden ist.

Die erste Sitzschiene 1 ist in ihrem unteren Bereich näherungsweise U-förmig ausgebildet, wobei die Längsränder als Verkrallungsbereiche 11 nach außen und oben gebogen sind und mit entsprechenden, nach innen und unten gebogenen Verkrallungsbereichen der zweiten Sitzschiene 2 durch wechselseitiges Hintergreifen zusammenwirken. In ihrem oberen Bereich weist die erste Sitzschiene 1 einen nach oben abstehenden, laschenförmigen Adapterbereich 13 auf. Die erste Sitzschiene 1 besteht aus zwei Längsteilen, welche im Adapterbereich 13 flächig aneinander liegen und zusammengefügt sind. Am hinteren Ende der ersten Sitzschiene 1 ist im Adapterbereich 13 eine als Bohrung ausgebildete Befestigungsstelle 15 zur starren Anbringung eines Sitzrahmens oder eines anderen festen Sitzstrukturteils und eine polygonale weitere Befestigungsstelle 17 zur alternativen Anlenkung einer Schwinge oder eines anderen beweglichen Sitzstrukturteils vorgesehen.

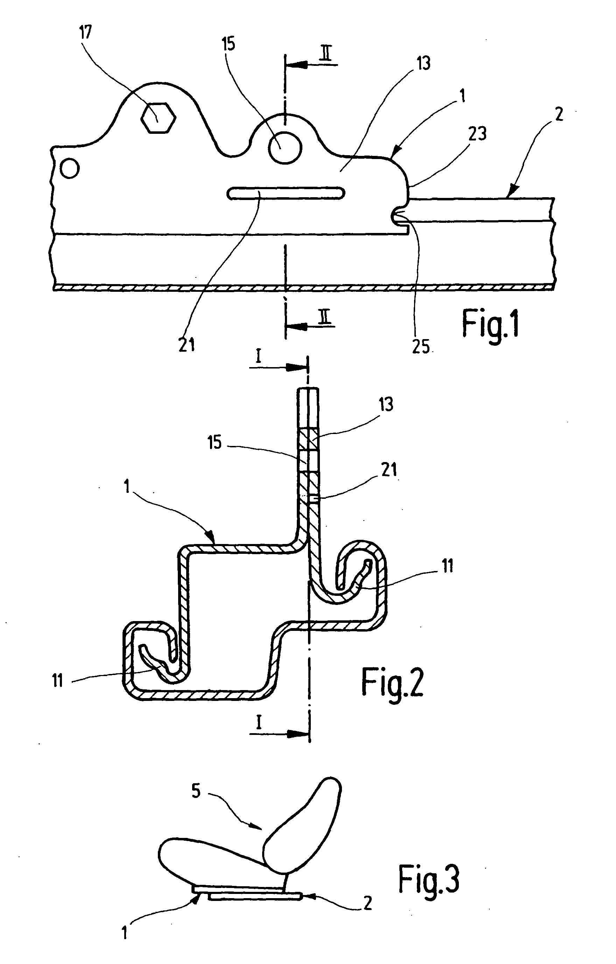

Im Adapterbereich 13 ist zwischen der Befestigungsstelle 15 und den Verkrallungsbereichen 11, genauer gesagt direkt unterhalb der Befestigungsstelle 15, eine schlitzförmige, gerade Aussparung 21 ausgebildet, welche sich in Längsrichtung erstreckt, d.h. horizontal angeordnet ist, und quer das Material eines der beiden Längsteile im Adapterbereichs 13 durchdringt, und zwar in Fig. 2 den rechten Längsteil, welcher etwas steifer ist. Die Mitte der Aussparung 21 sitzt vorliegend genau vertikal unterhalb der Befestigungsstelle 15, kann aber auch anders angeordnet sein. Am hinteren Rand 23 der ersten Sitzschiene 1 ist in dem näher zur Befestigungsstelle 15 gelegenen Verkrallungsbereich 11 eine sich in Längsrichtung nach hinten öffnende Einbuchtung 25 ausgebildet.

Im Crashfall, beispielsweise bei einem Frontcrash, oder bei einem statischen Gurtersatzlasttest werden über die Befestigungsstelle 15, insbesondere auf der Fahrzeugsitzseite mit Gurtschloß, starke Kräfte eingeleitet. Aufgrund der Aussparung 21 kommt es in deren Bereich zu einer gezielten plastischen Deformation des Adapterbereichs 13, welche kurzzeitig eine geringere Kraftweiterleitung bewirkt. Durch die Übertragung der Kräfte einerseits zwischen den beiden Längsteilen der ersten Sitzschiene 1 und andererseits über den starren Sitzrahmen auf die andere Fahrzeugsitzseite erfolgt eine gleichmäßigere Verteilung der unsymmetrisch eingeleiteten Last innerhalb der ersten Sitzschiene 1 und zwischen den beiden Fahrzeugsitzseiten, d.h. der Traganteil der Verkrallungs- und Führungsbereiche wird gleichmäßiger. Die Gefahr, daß die erste Sitzschiene 1 andernfalls sich mit ihren Verkrallungsbereichen 11 am hinteren Rand 23 in die zweite Sitzschiene 2 einschneidet und diese gegebenenfalls durchschneidet, ist dadurch verringert. Außerdem wird im Crashfall durch die plastische Deformation ein kleiner Teil der Crashenergie dissipiert. Mit der gezielten Deformation wird der hintere Rand 23 nach oben gezogen. Die Einbuchtung 25 verhindert dabei zusätzlich eine Kerbwirkung der Materialpartie, welche die Einbuchtung 25 nach unten begrenzt, indem diese scharfkantige und steife Materialpartie nach unten abgebogen wird, anstatt sich in den Verkrallungsbereich der zweiten Sitzschiene 2 einzuschneiden und den unter Zugspannung stehenden Profilabschnitt der zweiten Sitzschiene 2 reißen zu lassen.

### Bezugszeichenliste

- 1: erste Sitzschiene
- 2: zweite Sitzschiene
- 5: Fahrzeugsitz
- 11: Verkrallungsbereich
- 13: Adapterbereich
- 15: Befestigungsstelle
- 17: weitere Befestigungsstelle
- 21: Aussparung
- 23: hinterer Rand
- 25: Einbuchtung

## Patentansprüche

1. Sitzschienenpaar für einen Fahrzeugsitz, insbesondere für einen Kraftfahrzeugsitz, mit einer ersten Sitzschiene (1) und einer zweiten Sitzschiene (2), wobei die erste Sitzschiene (1) in Längsrichtung verschieblich in der zweiten Sitzschiene (2) geführt ist und mit wenigstens einem Verkrallungsbereich (11) zum Zusammenwirken mit der zweiten Sitzschiene (2) und mit einem Adapterbereich (13) versehen ist, der wenigstens eine Befestigungsstelle (15) zur terbereich (13) versehen ist, der wenigstens eine Befestigungsstelle (15) zur Anbringung eines Strukturteils des Fahrzeugsitzes (5) aufweist, **dadurch gekennzeichnet, dass** im Kraftfluss zwischen der Befestigungsstelle (15) und dem Verkrallungsbereich (11) eine Aussparung (21) vorgesehen ist, wodurch die im Crashfall über die Befestigungsstelle eingeleiteten Kräfte eine gezielte plastische Deformation im Bereich der Aussparung (21) vornehmen.

2. Sitzschienenpaar nach Anspruch 1, **dadurch gekennzeichnet, dass** die Aussparung (21) schlitzförmig ausgebildet ist.

3. Sitzschienenpaar nach Anspruch 2, **dadurch gekennzeichnet, dass** die Aussparung (21) gerade gestreckt ist.

4. Sitzschienenpaar nach Anspruch 3, **dadurch gekennzeichnet, dass** die Aussparung (21) sich in Längsrichtung erstreckt.

5. Sitzschienenpaar nach einem der Ansprüche 1 bis 4, **dadurch gekennzeichnet, dass** die Aussparung (21) im Adapterbereich (13) der ersten Sitzschienenpaar (1) ausgebildet ist.

6. Sitzschienenpaar nach Anspruch 5, **dadurch gekennzeichnet, dass** die Aussparung (21) direkt unterhalb der Befestigungsstelle (15) ausgebildet ist.

7. Sitzschienenpaar nach Anspruch 5 oder 6, **dadurch gekennzeichnet, dass** die Aussparung (21) den Adapterbereich (13) quer zur Längsrichtung nur teilweise durchdringt.

8. Sitzschienenpaar nach einem der Ansprüche 1 bis 7, **dadurch gekennzeichnet, dass** das Strukturteil starr am Adapterbereich (13) angebracht ist.

9. Sitzschienenpaar nach einem der Ansprüche 1 bis 8, **dadurch gekennzeichnet, dass** an ihrem hinteren Rand (23) eine Einbuchtung (25) ausgebildet ist.

10. Sitzschienenpaar nach einem der Ansprüche 1 bis 9, **dadurch gekennzeichnet, dass** die erste Sitzschiene (1) als Oberschiene und die zweite Sitzschiene (2) als Unterschiene ausgebildet ist.

11. Längseinstellbarer Fahrzeugsitz (5) mit wenigstens einem Sitzschienenpaar nach einem der Ansprüche 1 bis 10.

## Claims

1. Pair of seat rails for a vehicle seat, in particular for a motor vehicle seat, having a first seat rail (1) and a second seat rail (2), the first seat rail (1) being guided in the second seat rail (2) so as to be displaceable in a longitudinal direction and being provided with at least one engagement region (11) for co-operating with the second seat rail (2) and with an adaptor region (13) which has at least one fixing location (15) for fitting a structural member of the vehicle seat (5), **characterised in that** a recess (21) is provided in the force path between the fixing location (15) and the engagement region (11), whereby the forces introduced via the fixing location in the event of a crash bring about a selected plastic deformation in the region of the recess (21).

2. Seat rail pair according to claim 1, **characterised in that** the recess (21) is of slot-like form.

3. Seat rail pair according to claim 2, **characterised in that** the recess (21) is elongate in a straight manner.

4. Seat rail pair according to claim 3, **characterised in that** the recess (21) extends in a longitudinal direction.

5. Seat rail pair according to any one of claims 1 to 4, **characterised in that** the recess (21) is constructed in the adaptor region (13) of the first seat rail pair (1).

6. Seat rail pair according to claim 5, **characterised in that** the recess (21) is constructed directly below the fixing location (15).

7. Seat rail pair according to claim 5 or 6, **characterised in that** the recess (21) extends only partially through the adaptor region (13) transversely relative to the longitudinal direction.

8. Seat rail pair according to any one of claims 1 to 7, **characterised in that** the structural member is fitted rigidly to the adaptor region (13).

9. Seat rail pair according to any one of claims 1 to 8, **characterised in that** an indentation (25) is constructed at the rear edge (23) thereof.

10. Seat rail pair according to any one of claims 1 to 9, **characterised in that** the first seat rail (1) is in the form of an upper rail and the second seat rail (2) is in the form of a lower rail.

11. Longitudinally adjustable vehicle seat (5) having at least one seat rail pair according to any one of claims 1 to 10.

## Revendications

1. Paire de rails de siège pour un siège de véhicule, en particulier pour un siège de véhicule automobile, comportant un premier rail de siège (1) et un deuxième rail de siège (2), le premier de rail de siège (1) étant guidé déplaçable dans le sens de la longueur dans le deuxième de siège (2) et étant doté d'au moins une zone d'accrochage (11) en vue d'une coopération avec le deuxième rail de siège (2) et d'une zone d'adaptation (13), qui présente un emplacement de fixation (15) pour l'attache d'une partie de structure du siège de véhicule (5), **caractérisée par le fait que** dans le flux de force entre l'emplacement de fixation (15) et la zone d'accrochage (11), est disposé un évidement (21), ce par quoi des forces amorcées sur l'emplacement de fixation en cas d'accident effectuent une déformation plastique visée dans la zone de l'évidement (21).

2. Paire de rails de siège selon la revendication 1, **caractérisée par le fait que** l'évidement (21) est réalisé en forme de rainure.

3. Paire de rails de siège selon la revendication 2, **caractérisée par le fait que** l'évidement (21) s'étend de façon rectiligne.

4. Paire de rails de siège selon la revendication 3, **caractérisée par le fait que** l'évidement (21) s'étend dans le sens de la longueur.

5. Paire de rails de siège selon l'une des revendications 1 à 4, **caractérisée par le fait que** l'évidement (21) est réalisé dans la zone d'adaptation (13) de la première paire de rails de siège (1).

6. Paire de rails de siège selon la revendication 5, **caractérisée par le fait que** l'évidement (21) est réalisé directement au-dessous de l'emplacement de fixation (15).

7. Paire de rails de siège selon l'une des revendications 5 ou 6, **caractérisée par le fait que** l'évidement (21) traverse la zone d'adaptation (13) transversalement au sens de la longueur seulement de façon partielle.

8. Paire de rails de siège selon l'une des revendications 1 à 7, **caractérisée par le fait que** la partie de structure est montée rigidement sur la zone d'adaptation (13).

9. Paire de rails de siège selon l'une des revendications 1 à 8, **caractérisée par le fait qu'**un enfoncement (25) est réalisé sur son bord arrière (23).

10. Paire de rails de siège selon l'une des revendications 1 à 9, **caractérisée par le fait que** le premier rail de siège (1) est réalisé en tant que rail supérieur et le deuxième rail de siège (2) est réalisé en tant que rail inférieur.

11. Siège de véhicule (5) réglable en longueur comportant au moins une paire de rails de siège telle que définie à l'une des revendications 1 à 10.
